# EUROPÄISCHE PATENTSCHRIFT

(11) **EP 1 952 686 B1**
(45) Veröffentlichungstag und Bekanntmachung des Hinweises auf die Patenterteilung: **20.05.2015**
(21) Anmeldenummer: 08000824.6
(22) Anmeldetag: 17.01.2008
(51) Int. Cl.: A01M 25/00, A01M 31/00

(54) **Verfahren und Vorrichtung zur Detektion und Zählung von kleineren Säugetieren**
Method and apparatus for detecting and counting small mammals
Procédé et dispositif destinés à la détection et au comptage de petits mammifères

(30) Priorität: 30.01.2007 DE 102007005487; 21.02.2007 DE 102007008412
(43) Veröffentlichungstag der Anmeldung: 06.08.2008
(73) Patentinhaber: Fülling, Olaf, Dr., 47239 Duisburg (DE)
(72) Erfinder: Fülling, Olaf, Dr., 47239 Duisburg (DE)
(74) Vertreter: Röther, Peter

(56) Entgegenhaltungen:
- EP-A- 0 395 135
- WO-A-02/21912

## Beschreibung

Die Erfindung betrifft ein Verfahren zur Detektion und zur Zählung kleinerer Säugetiere in Gangsystemen, insbesondere in der Landwirtschaft und dem Gartenbau.

Bei den zu detektierenden Tieren handelt es sich beispielsweise um Wühlmäuse oder Ratten, wobei insbesondere die Wühlmäuse durch ihr komplexes Gangsystem in der Landwirtschaft bzw. im Gartenbau erhebliche Schäden verursachen.

Es ist zwar bereits bekannt, oberirdisch auf Feldern und Wiesen, die beispielsweise von Wühlmäusen bevölkert sind, Vorrichtungen aufzustellen, die beim Durchgang eines Tieres einen Zählimpuls auslösen. Es handelt sich hierbei um Vorrichtungen mit mechanisch betätigbaren Schaltern in Form von kleinen Türen. Nachteilig hierbei ist jedoch zum einen der mechanische Aufwand, der auch störungsanfällig ist. Zum anderen ist nie sicher, ob die Betätigung des Schalters nun von einer Wühlmaus, einem Maulwurf oder gar vom Wind erfolgte.

Darüber hinaus sind auch schon berührungslos arbeitende Registrierungsvorrichtungen bekannt, beispielsweise aus der EP-A- 0 395 135 oder WO-A-02/21912. Hierbei handelt es sich jedoch um Vorrichtungen, die für den unterirdischen Betrieb ungeeignet sind und darüber hinaus dazu vorgesehen sind, ein Tier zu registrieren, um es dann zu vernichten.

Darüber hinaus ist es naturgemäß wichtig, nicht nur die oberirdisch aktiven Tiere sondern auch die in den unterirdischen Gängen aktiven Tiere zu ermitteln und zu zählen, damit über die Population und Populationsdichte der Nager genauere Angaben gemacht werden können, die als Grundlage zur Bekämpfung dienen. Die Bekämpfung kann dann mit modernen ökologisch verträglichen Methoden erfolgen, oder bei einem Einsatz von Rodentiziden, die Wirkstoffmenge auf das Notwendige reduzieren.

Der Erfindung liegt daher die Aufgabe zugrunde, ein Verfahren der eingangs genannten Art so zu führen, dass mechanische Einflüsse bei der Registrierung keine Rolle spielen und die zu detektierende Tierart genauer eingrenzbar ist.

Die Erfindung löst diese Aufgabe gemäß dem kennzeichnenden Teil des Anspruchs 1 dadurch, dass in das unterirdische Gangsystem tunnel- bzw. schachtartige Zwängsführungen angeordnet sind, die über mit der Gangrichtung und miteinander fluchtende Öffnungen verfügen, deren Größe so gewählt ist, dass ie in etwa dem Querschnitt des Ganges entspricht, wobei das zu detektierende Tier durch die Zwangsführung geleitet wird und in dieser berührungslos der durch die Körpertemperatur des Tieres verursachte Temperaturanstieg ermittelt und hierdurch ein Zählimpuls ausgelöst wird, der registriert und gespeichert wird.

Die Erfindung wird weiterhin gelöst durch eine Vorrichtung gemäß Anspruch 3, die eine in das Gangsystem in den potentiellen Weg der/des zu detektierenden Tiere/s angeordnete tunnel- bzw. schachtartige Zwangsführung aufweist, in deren Wandung mindestens ein auf Wärme reagierender Bewegungsmelder angeordnet ist, der über eine Signalleitung mit einem Datenlogger verbunden ist.

Durch den Einsatz eines derartigen Bewegungsmelders ist zum einen das Kriterium "berührungslose Messung" erfüllt, so dass die zu registrierenden Tiere durch keinerlei Hindernis gestört sind. Zum anderen ist das Kriterium erfüllt, dass nur warmblütige Tiere registriert werden und nicht beispielsweise Schnecken, Eidechsen etc..

Durch die Wahl der Zwangsführungsdurchmesser kann auch schon grob zwischen Schädlingsarten (Wühlmaus oder Ratte) unterschieden werden.

Die Zählimpulse werden dem Datenlogger zugeführt, in dem die Daten aufbereitet werden und gemäß Anspruch 2 auch online abgerufen werden können.

Die Zwangsführung besteht erfindungsgemäß aus einem hohlzylindrischen Rohr, das in einer zu einem unterirdischen Gang des zu detektierenden Tieres geführten Bohrung in vertikaler Stellung angeordnet ist, wobei in der Wandung miteinander und mit der Gangführung fluchtende Öffnungen vorgesehen sind, oberhalb derer der Bewegungsmelder angeordnet ist.

Die Signalleitung vom Bewegungsmelder zum Datenlogger wird durch das Rohr nach oben zur Oberfläche geführt. Die Größe der Öffnungen sind dabei so gewählt, dass sie in etwa dem Querschnitt des Gangs entsprechen.

Der Bewegungsmelder ist so oberhalb der Öffnungen angeordnet, dass der Detektionswinkel des Bewegungsmelders optimal ausgenutzt werden kann.

Mehr als 20 derartiger Vorrichtungen können in einem Gangsystem von beispielsweise Wühlmäusen angeordnet sein, wobei jeder Vorrichtung ein Kanal im Datenlogger zugeordnet ist.

Somit kann man recht genaue Angaben über die Aktivitiät der (beispielsweise) Wühlmäuse machen. Die Aktivität, wiederum, erlaubt zusammen mit anderen Daten Rückschlüsse auf die Populationsdichte.

Dabei kann die Vorrichtung ein spritzgegossenes Kunststoffteil sein, in welches die Halterung für den Bewegungsmelder gleich mit eingeformt ist.

Um unterscheiden zu können, ob eine Ratte oder eine Maus gezählt worden ist, ist gemäß Anspruch 5 vorgesehen, dass hintereinander in Bewegungsrichtung des Tieres mehr als eine Zwangsführung mit unterschiedlichem Durchlassquerschnitten angeordnet sind, wobei jeder der Zwangsführungen ein Bewegungsmelder zugeordnet ist.

Wenn eine (große) Ratte in die Vorrichtung von der Seite hinein läuft, die den größeren Querschnitt aufweist, wird sie in dem Bereich der Vorrichtung mit dem kleineren Querschnitt nicht weiter kommen, so dass hier der zweite Zählimpuls fehlt. Die kleinere Maus hingegen löst sowohl den ersten als auch den zweiten Bewegungsmelder aus, so dass festgestellt werden kann, dass es sich in diesem Fall nicht um eine Ratte handelt.

Die Erfindung wird im folgenden anhand von Zeichnungen dargestellt und erläutert.

Es zeigen:

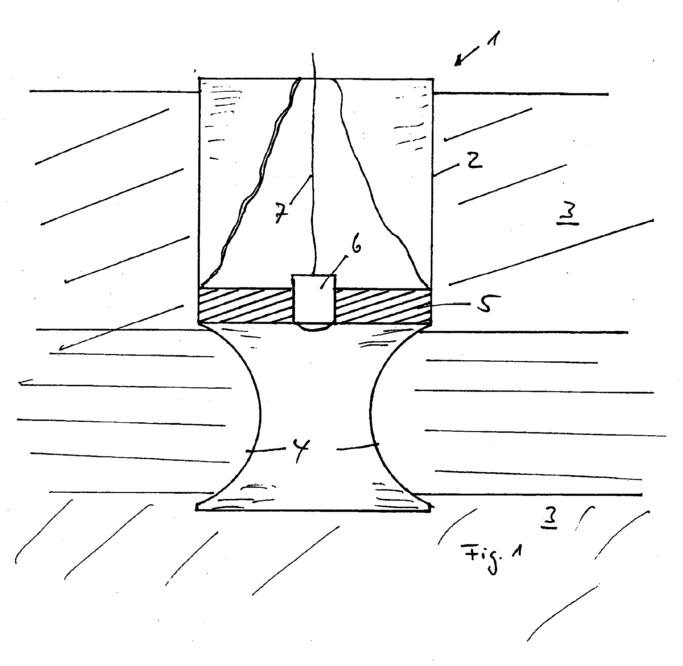

- Fig. 1: erfindungsgemäße Wahlvorrichtung

In der Figur 1 ist schematisch eine Vorrichtung zur Detektion und zur Zählung schädliche Säugetiere in der Landwirtschaft oder im Gartenbau dargestellt, die im allgemeinen mit dem Bezugszeichen 1 versehen ist, sie besteht aus einem vorteilhafterweise aus Kunststoff bestehenden Rohr 2, das in eine Bohrung im (beispielsweise) Feldboden 3 vertikal angeordnet ist.

Die Bohrung endet in einem vorher mit Sonden ausfindig gemachten Gang eines Gangsystems von beispielsweise Wühlmäusen. Fluchtend zueinander und zur Gangrichtung sind Öffnungen 4 eingebracht, oberhalb derer in einer Halterung 5 ein auf Wärme reagierender Bewegungsmelder 6 angeordnet ist, der über eine Leitung 7 (alternativ über eine Funkstrecke) mit einem nicht dargestellten Datenlogger verbunden ist. Gelangt eine Wühlmaus auf ihrem Weg durch das Gangsystem durch eine Öffnung 4 in den Bereich des Bewegungsmelders 6, detektiert dieser Bewegungsmelder das Tier infolge seiner Körpertemperatur und sendet einen Zählimpuls an den Lögger.

Zur groben Größensortierung kann vorgesehen sein, dass hintereinander mehrere Vorrichtungen 1 angeordnet sind, wobei die Durchlassöffnungen unterschiedlich sind und in jeder Vorrichtung ein Bewegungsmelder 6 vorgesehen ist.

## Patentansprüche

1. Verfahren zur Detektion und zur Zählung kleinerer Säugetiere in Gangsystemen, insbesondere in der Landwirtschaft und im Gartenbau, wobei in dem unterirdischen Gangsystem tunnel- bzw. schachtartige Zwangsführungen (2) angeordnet sind, die über mit der Gangrichtung und miteinander fluchtende Öffnungen (4) verfügen, deren Größe so gewählt ist, dass sie in etwa dem Querschnitt des Ganges entspricht wobei das zu detektierende Tier durch die Zwangsführung (2) geleitet wird und in dieser berührungslos der durch die Körpertemperatur des Tieres verursachte Temperaturanstieg ermittelt und hierdurch ein Zählimpuls ausgelöst wird, der registriet und gespeichert wird.

2. Verfahren nach Anspruch 1,
**dadurch gekennzeichnet,**
**dass** die registrierten und gespeicherten Daten online abrufbar sind.

3. Vorrichtung (1) zur Durchführung des Verfahrens nach Anspruch 1 oder 2, mit mindestens einer in das Gangsystem in den potentiellen Weg der/ des zu detektierenden Tiere/s angeordneten tunnel- bzw. schachtartigen Zwangsführung (2), in deren Wandung mindestens ein auf Wärme reagierender Bewegungsmelder (6) angeordnet ist, der über eine Signalleitung (7) mit einem Datenlogger verbunden ist, wobei die Zwangsführung aus einem hohlzylindrischen Rohr (2) besteht, das in einer zu einem unterirdischen Gang des zu detektierenden Tieres geführten Bohrung in vertikaler Stellung angeordnet ist, wobei in der Wandung miteinander und mit der Gangrichtung fluchtende Öffnungen (4) vorgesehen sind, oberhalb derer der Bewegungsmelder angeordnet ist.

4. Vorrichtung nach Anspruch 3,
**dadurch gekennzeichnet,**
**dass** der Bewegungsmelder in einer oberhalb der Öffnungen im Rohr vorgesehenen Halterung befestigt ist.

5. Vorrichtung nach einem der Ansprüche 3 und 4,
**dadurch gekennzeichnet,**
**dass** hintereinander in Bewegungsrichtung des Tieres mehr als eine Zwangsführung mit unterschiedlichen Durchlassquerschnitten angeordnet sind, wobei jeder der Zwangsführungen ein Bewegungsmelder zugeordnet ist.

## Claims

1. Method for detecting and for counting smaller mammals in ductal systems, in particular in agriculture and horticulture, whereby tunnel- or shaft-like forced guidances (2) are located in the underground ductal system, comprising openings (4) that are flush with each other and the direction of the duct, the size of which is selected such that they approximately equal the cross-section of the duct, whereby the animal to be detected is guided through the force guidance (2) and the temperature increase caused by the body temperature of the animal is determined in a contact-free way within the same and a counting impulse triggered by this, which is registered and stored.

2. Method according to claim 1,
**characterised in that**
the registered and stored data can be accessed online.

3. Device (1) for carrying out the method according to claim 1 or 2, with at least one tunnel- or shaft-like forced guidance (2) located in the forced guidance in the potential path of the animal(s) to be detected, in the walls of which at least one heat reacting movement sensor (6) is located, connected with a data logger via a signal line (7), whereby the forced guidance consists of a hollow cylindrical pipe (2), located in a vertical position in an underground passage of the bore leading to the animal to be detected, whereby openings (4) arranged flush with each other and with the force direction are envisaged in the wall, above which the movement sensor is located.

4. Device according to claim 3,
**characterised in that**
the movement sensor is affixed in a holder envisaged in the pipe above the openings.

5. Device according to one of the claims 3 and 4,
**characterised in that**
more than one forced guidance with different outlet cross-sections are located behind each other in movement direction of the animal, whereby each of the forced guidances is allocated one movement sensor.

## Revendications

1. Procédé de détection et de comptage de petits mammifères dans des réseaux de galeries, en particulier dans l'agriculture et dans l'horticulture, dans lequel des éléments de guidage forcé (2) analogues à des tunnels ou des gaines sont agencés dans le réseau de galeries souterrain, lesquels éléments de guidage forcé sont munis d'ouvertures (4) alignées les unes avec les autres et avec la direction de la galerie, leur taille étant choisie de telle sorte qu'elle correspond approximativement à la section transversale de la galerie, dans lequel l'animal à détecter est dirigé par l'intermédiaire de l'élément de guidage forcé (2) et l'augmentation de température provoquée par la température corporelle de l'animal est déterminée dans celui-ci, sans contact, et déclenche ainsi une impulsion de comptage qui est enregistrée et stockée.

2. Procédé selon la revendication 1, **caractérisé en ce que** les données enregistrées et stockées peuvent être récupérées en ligne.

3. Dispositif (1) pour mettre en oeuvre le procédé selon la revendication 1 ou 2, comportant au moins un élément de guidage forcé (2) analogue à un tunnel ou à une gaine, agencé dans le réseau de galeries sur le trajet potentiel des animaux/de l'animal à détecter, dans la paroi duquel est agencé au moins un détecteur de mouvement (6) réagissant à la chaleur, lequel détecteur de mouvement est relié à un enregistreur de données par l'intermédiaire d'une ligne de signaux (7), dans lequel l'élément de guidage forcé est constitué d'un tube cylindrique creux (2) qui, en position verticale, est agencé dans un trou percé jusqu'à une galerie souterraine de l'animal à détecter, dans lequel des ouvertures (4) sont prévues dans la paroi alignées les unes avec les autres et avec la direction de la galerie, le détecteur de mouvement étant agencé au-dessus de ces ouvertures.

4. Dispositif selon la revendication 3, **caractérisé en ce que** le détecteur de mouvement est fixé dans un support prévu au-dessus des ouvertures dans le tube.

5. Dispositif selon l'une des revendications 3 et 4, **caractérisé en ce que** plusieurs éléments de guidage forcé ayant différentes sections de passage sont agencés les uns derrière les autres dans la direction de déplacement de l'animal, dans lequel un détecteur de mouvement est associé à chacun des éléments de guidage forcé.
